Europäisches Patentamt

European Patent Office

Office européen des brevets

(11) Veröffentlichungsnummer: **0 274 562 B1**

# EUROPÄISCHE PATENTSCHRIFT

(45) Veröffentlichungstag der Patentschrift: **02.01.92**

(51) Int. Cl.⁵: **A47J 31/057**, A47J 31/00

(21) Anmeldenummer: **87108814.2**

(22) Anmeldetag: **19.06.87**

(54) **Kaffee- oder Teemaschine.**

(30) Priorität: **22.12.86 DE 3643877**

(43) Veröffentlichungstag der Anmeldung:
**20.07.88 Patentblatt 88/29**

(45) Bekanntmachung des Hinweises auf die
Patenterteilung:
**02.01.92 Patentblatt 92/01**

(84) Benannte Vertragsstaaten:
**AT BE CH ES FR GB LI NL SE**

(56) Entgegenhaltungen:
**AT-B- 376 539**
**DE-U- 7 811 283**
**US-A- 3 291 033**
**US-A- 3 371 593**
**US-A- 4 165 681**

(73) Patentinhaber: **Melitta Haushaltsprodukte
GmbH & Co. Kommanditgesellschaft
Ringstrasse 99
W-4950 Minden 1(DE)**

(72) Erfinder: **Häuslein, Reinhard
Lange Wand 26
W-4950 Minden(DE)**

(74) Vertreter: **Stracke, Alexander, Dipl.-Ing. et al
Jöllenbecker Strasse 164
W-4800 Bielefeld 1(DE)**

## Beschreibung

Die vorliegende Erfindung betrifft eine Kaffee- oder Teemaschine mit einem Frischwasserbehälter, einem Durchlauferhitzer, einem Steigrohr sowie einer Überlaufeinrichtung zur Einleitung des erhitzten Wassers in ein oberhalb einer Kanne zur Aufnahme des Filtrates angeordnetes Filtergefäß, wobei das Steigrohr in einen periodisch entleerbaren Zwischenbehälter der Überlaufeinrichtung einmündet und das nutzbare Fassungsvermögen des Zwischenbehälters einen Bruchteil des Fassungsvermögens des Frischwasserbehälters beträgt.

Durch die DE-U-78 11 283 ist eine gattungsgemäße Kaffeemaschine bekannt. Die Überlaufeinrichtung besteht im wesentlichen aus einem Saugheber, der als U-förmiges Rohr ausgebildet ist, wobei die parallelen Schenkel unterschiedlich lang sind. Bis auf eine Restmenge des Brühwassers durchströmt das gesamte Brühwasser diesen Saugheber. Zusätzlich benötigt die Kaffeemaschine nach der vorerwähnten Literaturstelle eine Restwasser-Entleerungsvorrichtung. Hierfür sind verschiedene bewegliche Teile erforderlich. Bei diesen beweglichen Teilen handelt es sich beispielsweise um einen Schwimmer- und Hebel betätigten Absperrstift oder um einen federnd schwenkbar gelagerten Behälter mit einer Dichtungsscheibe.

Der vorliegenden Erfindung liegt die Aufgabe zugrunde, eine gattungsgemäße Kaffee- oder Teemaschine in konstruktiv einfacher Weise so weiter zu entwickeln, daß die Funktion nicht von Werten abhängig ist, die nicht genau definierbar sind, sondern die im Sinne von Vorgabewerten den Brühvorgang beeinflussen.

Zur Lösung der gestellten Aufgabe ist bei einer gattungsgemäßen Kaffee- oder Teemaschine vorgesehen, daß zur Entleerung des mit einer Entlüftungsöffnung, vorzugsweise einer Entlüftungsbohrung, versehenen Zwischenbehälters in einem Auslaufbereich an der tiefsten Stelle eine gesteuerte Pumpe oder eine gesteuerte Verschlußklappe angeordnet ist. Die Pumpe oder die Verschlußklappe kann in vorbestimmten Zeitabständen für ebenso vorherbestimmte Zeitabstände eingeschaltet werden, so daß jeweils im Zwischenbehälter angesammelte Teilmengen innerhalb kürzester Zeit in das Filtergefäß gefördert werden. Die Pumpe wird über einen Elektromotor angetrieben, wodurch sichergestellt ist, daß in bestimmten Intervallen das im Zwischenbehälter angesammelte Brühwasser in das Filtergefäß gefördert wird. Sofern der Zwischenbehälter mit einer Verschlußklappe ausgerüstet ist, kann auch diese von einem Elektromotor oder von einem Elektromagneten intervallmäßig betätigt werden. Durch den elektrischen Antrieb ist sichergestellt, daß auch das Wasser gefördert wird, da der Vorgang im Sinne eines zwangsgesteuerten Ablaufes zu sehen ist und nicht von Werten abhängig ist, die nicht genau erfaßbar sind. Sofern für die Entleerung des Zwischenbehälters diese mit der Verschlußklappe ausgerüstet ist, wird die Kaffee- oder Teemaschine konstruktiv besonders einfach, wenn die Verschlußklappe innerhalb eines Auslaufstutzens des Zwischenbehälters angeordnet ist. Bei der Ausführung mit der Verschlußklappe kann das im Zwischenbehälter befindliche Brühwasser im freien Fall in das Filtergefäß eingebracht werden, so daß dadurch die Kaffee- oder Teemaschine insgesamt konstruktiv einfacher wird.

Weitere Merkmale der Erfindung sind Gegenstand weiterer Unteransprüche.

Ausführungsbeispiele der Erfindung sind in den beigefügten Zeichnungen dargesstellt lund werden im folgenden näher beschrieben.

Es zeigen:

Fig. 1 eine schematische Darstellung einer erfindungsgemäßen Kaffee- oder Teemaschine,

Fig. 2 eine Einselheit der Kaffee- oder Teemaschine nach Fig. 1 in vergrößerter Darstellung,

Fig. 3 eine Ansicht einer Kaffee- oder Teemaschine nach einem weiteren Ausführungsbeispiel der Erfindung.

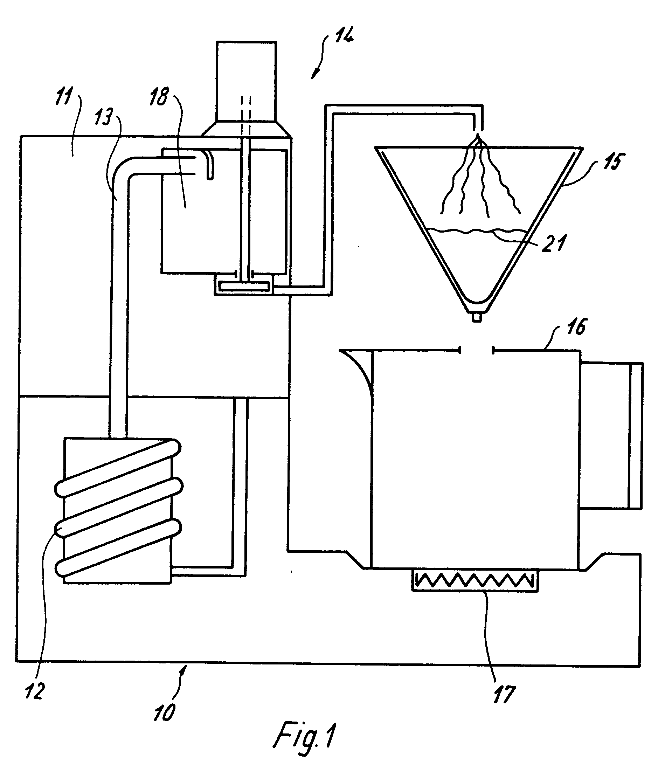

In Figur 1 ist mit dem Bezugszeichen 10 insgesamt eine Kaffee- oder Teemaschine bezeichnet.

Diese Kaffee- oder Teemaschine 10 weist den prinzipiellen Aufbau von sogenannten Haushalts-Kaffee- oder Teemaschinen auf. In einen Frischwasserbehälter 11 wird eine vorbestimmte Menge von Kaltem Wasser eingefüllt. Dieses kalte Wasser wird über einen Durchlauferhitzer 12 erhitzt und über ein Steigroher 13 sowie eine insgesamt mit dem Bezugszeichen 14 versehene Überlaufeinrichtung in ein Filtergefäß 15 gefördert, welches sich oberhalb einer das Filtrat aufnehmenden Kanne 16 befindet.

Die Kanne 16 steht üblicherweise auf einer Warmhalteplatte 17.

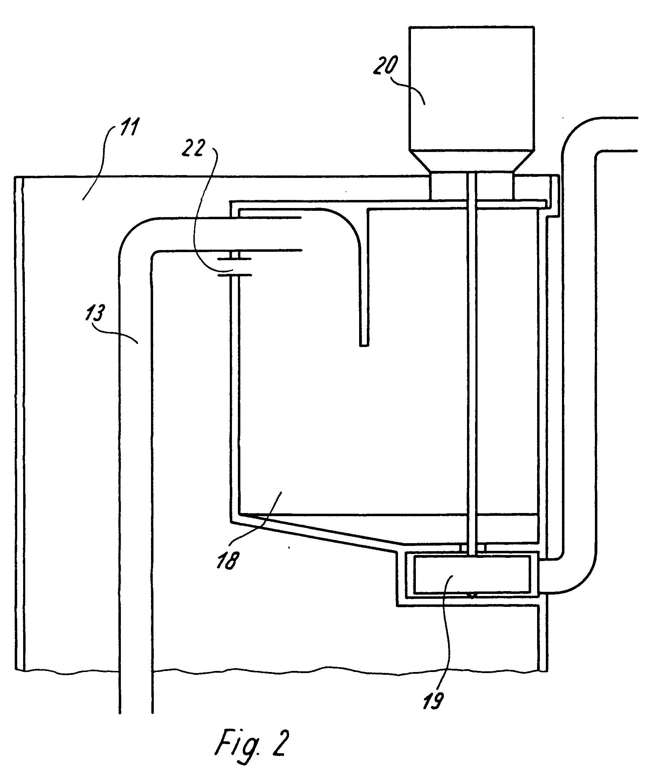

Die Überlaufeinrichtung 14 ist mit einem Zwischenbehälter 18 ausgestattet, dessen Besonderheiten sich deutlicher aus Figur 2 ergeben.

Es wird deutlich, daß in den Zwischenbehälter 18 das Steigrohr 13 einmündet.

Dies bedeutet, daß das erhitzte Wasser zunächst in den Zwischenbehälter 18 gefördert wird. Innerhalb des Zwischenbehälters 18 kann nun eine vorbestimmte Menge erhitzten Wassers gesammelt werden, die beträchtlich kleiner ist als die Gesamtwassermenge, die Frischwasserbehälter 1 bevorratet werden kann. Weiterhin macht Figur 2 deutlich, daß im Auslaufbereich des Zwischenbehälters 18 an dessen tiefster Stelle eine Pumpe 19 angeordnet ist, die über einen Motor 20 betätigt werden kann.

Über diese Pumpe 19 kann das im Zwischenbehälter 18 gesammelte, heiße Brühwasser in relativ kurzer Zeit in das Filtergefäß 18 gefördert werden, so daß ein im Filtergefäß 15 befindlicher Aromaträger 21 schnell und gleichmäßig durchfeuchtet werden kann.

Der Zwischenbehälter 18 ist, was Figur 2 deutlich zeigt, mit einer Entlüftungsbohrung 22 versehen, so daß die Pumpe 19 nicht gegen einen Unterdruck im Zwischenbehälter 18 wirksam werden muß.

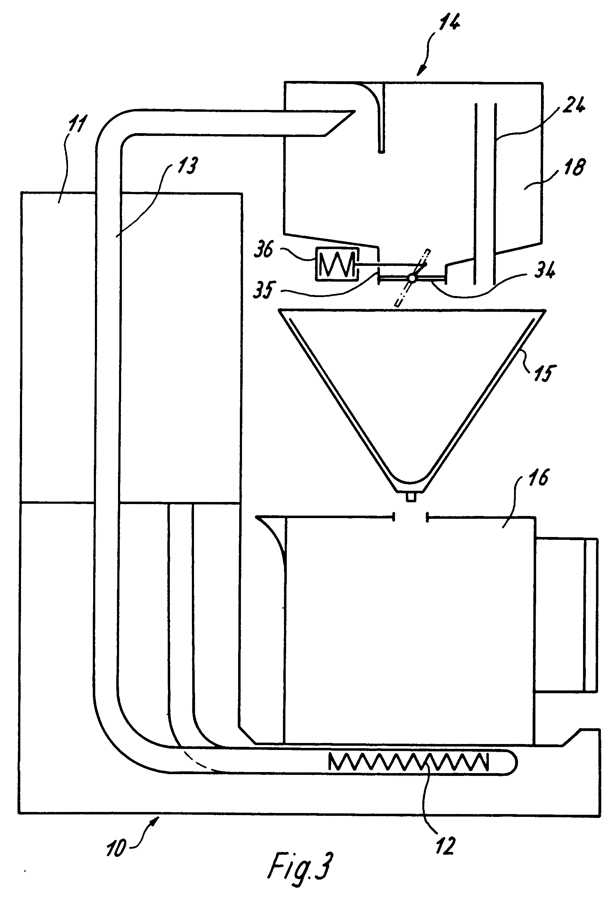

In Figur 3 ist Ausführungsbeispiel der Erfindung dargestellt, bei dem im Auslaufbereich des Zwischenbehälters 18 lediglich eine Verschlußklappe 34 vorgesehen ist und zwar im Bereich des Auslaufstutzens 35 des Zwischenbehälters 18, der sich zentral oberhalb des Filtergefäßes 15 befindet. Die Verschlußklappe 34 kann beispielsweise durch einen Schaltmagneten 36 werden, hier sind aber auch andere Betätigungselemente wie beispielsweise elektromotorisch angetriebene Hubgetriebe oder Bimetallschalter denkbar.

Auch beim Ausführungsbeispiel gemäß Figur 3 wird das erhitzte Brühwasser zunächst in den geschlossenen Zwischenbehälter 18 gefördert, wenn sich dort eine vorbestimmte Menge erhitzten Wasser befindet, wird die Verschlußklappe 34 geöffnet und das im Zwischenbehälter 18 befindliche Brühwasser kann im freien Fall innerhalb kürzester Zeit in das Filtergefäß 15 einfließen.

Bei allen Ausführungsbeispielen, die in den Zeichnungen dargestellt und vorstehend beschrieben wurden, besteht die Möglichkeit, den Zwischenbehälter 18 beheizbar zu gestalten, im Wärmeverluste während der Sammelphase absolut zu vermeiden.

Bei entsprechend guter Wärmeisolierung des Zwischenbehälters 18 oder für den Fall, daß die Zeitspanne, innerhalb derer Heißwasser innerhalb des Zwischenbehälters 18 gesammelt wird, recht kurz ist, kann allerdings auch auf eine zusätzliche Beheizung verzichtet werden.

## Patentansprüche

1.  Kaffee- oder Teemaschine mit einem Frischwasserbehälter (11), einem Durchlauferhitzer (12), einem Steigrohr (13) sowie einer Überlaufeinrichtung (14) zur Einleitung des erhitzten Wassers in ein oberhalb einer Kanne (16) zur Aufnahme des Filtrates angeordnetes Filtergefäß (15), wobei das Steigrohr (13) in einen periodisch entleerbaren Zwischenbehälter (18) der Überlaufeinrichtung (14) einmündet, und daß das nutzbare Fassungsvermögen des Zwischenbehälters (18) einen Bruchteil des Fassungsvermögens des Frischwasserbehälters (11) beträgt, **dadurch gekennzeichnet,** daß zur Entleerung des mit einer Entlüftungsöffnung, vorzugsweise einer Entlüftungsbohrung (22), versehenen Zwischenbehälters (18) in seinem Auslaufbereich an der tiefsten Stelle eine gesteuerte Pumpe (19) oder eine gesteuerte Verschlußklappe (34) vorgesehen ist.

2.  Kaffee- oder Teemaschine bei der der Zwischenbehälter (18) mit einer Verschlußklappe (34) ausgerüstet ist, dadurch gekennzeichnet, daß die Verschlußklappe (34) innerhalb eines Auslaufstutzens (35) des Zwischenbehälters (18) angeordnet ist.

## Claims

1.  Coffee or tea machine with a fresh water container (11), a throughflow heater (12), a rising pipe (13) as well as an overflow device (14) for the introduction of the heated water into a filter vessel (15) arranged above a can (16) for the reception of the filtrate, wherein the rising pipe (13) opens into a periodically emptiable intermediate container (18) of the overflow device (14), and that the usable holding capacity of the intermediate container (18) amounts to a fraction of the holding capacity of the fresh water container (11), characterised thereby that for the emptying of the intermediate container (18), which is provided with a ventilating opening, preferably a ventilating bore (22), a driven pump (19) or driven closure flap (34) is provided in the outlet region of the intermediate container at the deepest place.

2.  Coffee or tea machine in which the intermediate container (18) is equipped with a closure flap (34), characterised thereby that the closure flap (34) is arranged within an outlet stub pipe (35) of the intermediate container (18).

## Revendications

1.  Machine à café ou à thé comportant un réservoir d'eau fraîche (11), un dispositif de chauffage à passage (12), un tube montant (13) ainsi qu'un dispositif de trop plein (14) pour conduire l'eau chauffée dans un récipient à filtre (15) placé au dessus d'une cafetière (16) destinée à recevoir le filtrat, le tube montant (13) débouchant dans un réservoir intermédiaire (18) du dispositif de trop plein (14), évacué périodiquement, et en ce que la capacité utile du réservoir intermédiaire (18) correspond à une fraction de le capacité du réservoir d'eau fraîche (11), machine caractérisée en ce que pour vider le réservoir intermédiaire (18) muni d'un orifice d'évacuation d'air de préférence un perçage d'évacuation d'air (22), il est prévu dans sa zone de sortie, à son point le plus bas, une pompe commandée (19) ou un clapet d'obturation commandé (34).

2. Machine à café ou à thé dont le réservoir intermédiaire (18) est muni d'un clapet d'obturation (34), machine caractérisée en ce que le clapet d'obturation (34) est prévu dans l'ajutage de sortie (35) du réservoir intermédiaire (18).

Fig.1

Fig. 2

*Fig.3*